# FASCICULE DE BREVET EUROPEEN

(11) **EP 4 140 862 B1**
(45) Date de publication et mention de la délivrance du brevet: **12.06.2024**
(21) Numéro de dépôt: 22187071.0
(22) Date de dépôt: 26.07.2022
(51) Int. Cl.: B62D 65/18

(54) **DISPOSITIF DE VERROUILLAGE D'UN OUTILLAGE PRÉSENTANT PLUSIEURS POSITIONS DE VERROUILLAGE**
VORRICHTUNG ZUM VERRIEGELN EINES WERKZEUGS MIT MEHREREN VERRIEGELUNGSPOSITIONEN
DEVICE FOR LOCKING A TOOL HAVING A PLURALITY OF LOCKING POSITIONS

(30) Priorité: 27.08.2021 FR 2108993
(43) Date de publication de la demande: 01.03.2023
(73) Titulaire: Stellantis Auto SAS, 78300 Poissy (FR)
(72) Inventeur: LESTRUHAUT, HERVE, 25490 FESCHES LE CHATEL (FR); LEGRAND, FRANCOIS NOEL, 25200 MONTBELIARD (FR)

(56) Documents cités:
- FR-A1- 2 941 020
- FR-A1- 2 979 889
- JP-A- 2013 028 324
- TW-A- 201 433 537

## Description

Le domaine technique concerne les dispositifs de verrouillage d'une platine sur un châssis et les outillages présentant de tels dispositifs.

Il est de plus en plus fréquent qu'un véhicule automobile soit proposé aux clients dans plusieurs versions différentes, notamment avec divers types de motorisations. Chaque type de motorisation (FR 2 941 020) présente généralement des particularités propres qui impliquent des différences aux niveaux des organes mécaniques, entre chaque version.

La plupart des organes mécaniques sont mis en oeuvre et assemblés sur le véhicule à l'aide d'outils spécifiques qui sont propres à chaque version du véhicule. Ainsi, pour une famille donnée de véhicule, de nombreux outils spécifiques sont mobilisés sur les mêmes chaines d'assemblage. Or, ces différents outils sont généralement stockés à proximité des chaines d'assemblage afin de permettre l'adaptation rapide des robots d'assemblage, en fonction des versions produites. Or les zones situées à proximité des chaines d'assemblage sont particulièrement limitées et les outils spécifiques sont particulièrement encombrants et occupent ainsi une place importante dans ces zones situées à proximité des chaines d'assemblage. La diversité des versions produites induit nécessairement un accroissement des coûts de développement et de production, notamment à cause de la diversité des outils spécifiques, ainsi qu'une complexification de la gestion des chaines d'assemblage et des assemblages des différentes versions du véhicule.

La plupart des outils spécifiques comportent une platine porte-outil, qui porte les outils, et qui est couplée à un châssis de l'outil spécifique. Pour la mise en oeuvre correcte de chaque outil spécifique, il est nécessaire de mettre en place divers systèmes mécaniques qui assurent chacun une fonction particulière de liaison entre la platine et le châssis, notamment soit une liaison permettant des mouvements relatifs limités de la platine et du châssis soit une liaison isostatique de la platine sur le châssis. Les systèmes mis en oeuvre sont particulièrement complexes et leur mise en oeuvre est parfois longue.

Afin de faciliter la gestion de la diversité des outils spécifiques, il convient de diminuer l'encombrement des outils spécifiques en bord de chaine d'assemblage et également de faciliter la mise en oeuvre des systèmes mécaniques qui assurent une partie des fonctionnements de ces outils spécifiques.

Ainsi, il existe un besoin d'une solution permettant de diminuer l'encombrement des bords des chaines d'assemblage et de faciliter la mise en oeuvre des outils spécifiques.

La présente invention a pour objet de pallier les problèmes exposés précédemment. Dans ce contexte technique, un but de la présente invention est de fournir un dispositif de verrouillage permettant, d'une part, la désolidarisation des platines de leur châssis pour permettre l'interchangeabilité des châssis et des platines et, d'autre part, pour simplifier la mise en oeuvre des outils spécifiques. A cet effet, la présente invention se rapporte à un dispositif de verrouillage conçu pour permettre l'assemblage d'une platine porte-outil sur un châssis, le dispositif comportant des moyens de verrouillage solidaires du châssis, conçus pour coopérer avec la platine et montés mobiles entre une position de désolidarisation, dans laquelle les moyens de verrouillage permettent la désolidarisation du châssis et de la platine, et une première position de verrouillage, dans laquelle les moyens de verrouillage permettent le verrouillage isostatique de la platine sur le châssis, le dispositif étant caractérisé en ce que les moyens de verrouillage comportent en outre une seconde position de verrouillage, distincte de la première position, dans laquelle les moyens de verrouillage permettent un débattement limité de la platine par rapport au châssis, lorsque la platine est engagée dans le dispositif.

L'invention concerne également un outillage comprenant une platine porte-outil sur laquelle sont ménagées une pluralité de fentes, l'outillage comportant en outre un châssis comprenant au moins un dispositif selon l'invention dans lequel les moyens de verrouillage sont conçus pour coopérer avec une fente de la platine. Ainsi, le dispositif de verrouillage selon l'invention permet l'assemblage et le désassemblage d'un outillage selon l'invention dans lequel un châssis est en mesure de recevoir plusieurs platines différentes, chacune portant un outil différent : il suffit de positionner les moyens de verrouillage sur la position désolidarisation. Ainsi, seules les platines sont stockées sur le bord de la chaine d'assemblage, ce qui permet de diminuer l'encombrement autour de la chaine d'assem blage.

Par ailleurs, le dispositif selon l'invention comporte une première position de verrouillage, dans laquelle les moyens de verrouillage permettent le verrouillage isostatique de la platine sur le châssis. La seconde position de verrouillage, distincte de la première position, permet quant à elle un débattement limité de la platine par rapport au châssis, lorsque la platine est engagée dans le dispositif. Ainsi, le dispositif selon l'invention remplace plusieurs systèmes mécaniques jusqu'alors nécessaires et permet en outre la désolidarisation simple de la platine et du châssis. Le dispositif selon l'invention permet donc d'obtenir un outillage dont la mise en oeuvre est simplifiée par rapport à celle des outils spécifiques classiques.

Selon un mode de réalisation du dispositif, les moyens de verrouillage comportent une zone d'engagement conçue pour permettre la coopération des moyens de verrouillage avec des moyens d'actionnement en vue de déplacer les moyens de verrouillage d'une position à une autre. Ainsi, la zone d'engagement permet la mise en oeuvre de moyens d'actionnement qui permettent à leur tour l'automatisation du changement de position des moyens de verrouillage. Avantageusement, les moyens d'actionnement sont solidaires du châssis.

Selon une possibilité de l'invention, les moyens de verrouillage comportent une broche mobile, le passage des moyens de verrouillage d'une position à une autre se faisant par une rotation et une translation de la broche. Une telle broche est simple à réaliser.

Avantageusement, la rotation correspond à un quart de tour de la broche. L'invention sera mieux comprise à la lecture de la description détaillée qui va suivre, donnée uniquement à titre d'exemple non limitatif et faite en se référant aux dessins annexés sur lesquels :
[Fig. 1] la figure 1, représente une vue en perspective d'un outillage selon l'invention ;
[Fig. 2] la figure 2, représente une vue en coupe d'un dispositif de verrouillage présent dans l'outillage de la figure 1, selon un premier plan de coupe, dans la position de désolidarisation ;
[Fig. 3] la figure 3, représente une vue en coupe du dispositif de verrouillage présent dans l'outillage de la figure 1, selon un deuxième plan de coupe, dans la seconde position de verrouillage ;
[Fig. 4] la figure 4, représente une vue en coupe du dispositif de verrouillage présent dans l'outillage de la figure 1, selon le deuxième plan de coupe, dans la première position de verrouillage ;
[Fig. 5] la figure 5, représente une vue en perspective des moyens d'actionnement montés sur un châssis de l'outillage de la figure 1;
[Fig. 6] la figure 6, représente une vue de dessus des moyens d'actionnement de la figure 5.

Dans ces figures, les mêmes références sont utilisées pour désigner les mêmes éléments.

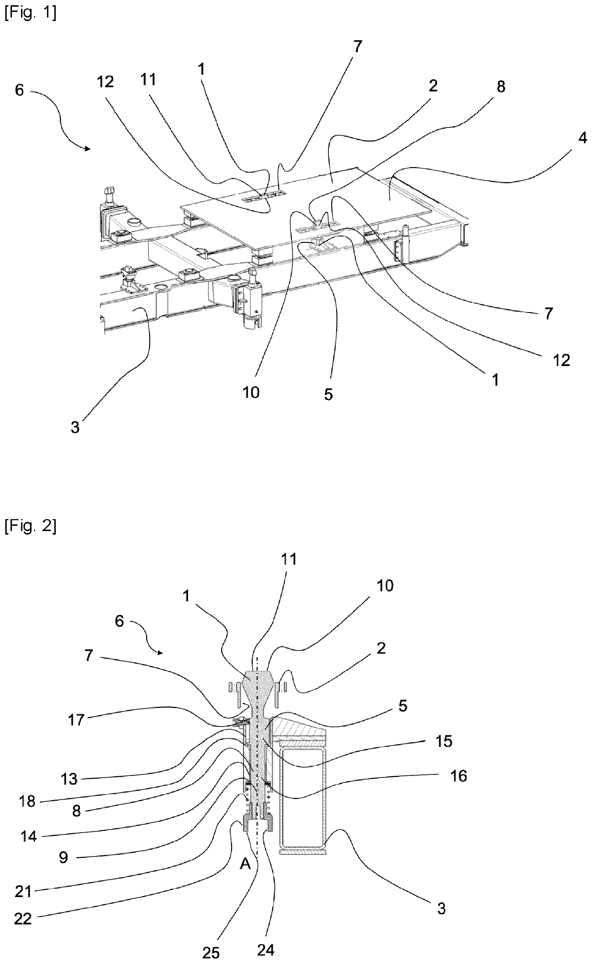

Un dispositif 1 de verrouillage selon l'invention, illustré sur les figures 1 à 4, est conçu pour permettre l'assemblage d'une platine 2 porte-outil, illustrée sur la figure 1, sur un châssis 3, illustré sur les figures 1, 2, 5 et 6. Dans le mode de réalisation illustré sur les figures, la platine 2 comprend une tôle 4 rectangulaire sur laquelle sont fixés les outils, non illustrés.

Le dispositif 1 comporte des moyens de verrouillage 5 solidaires du châssis 3.

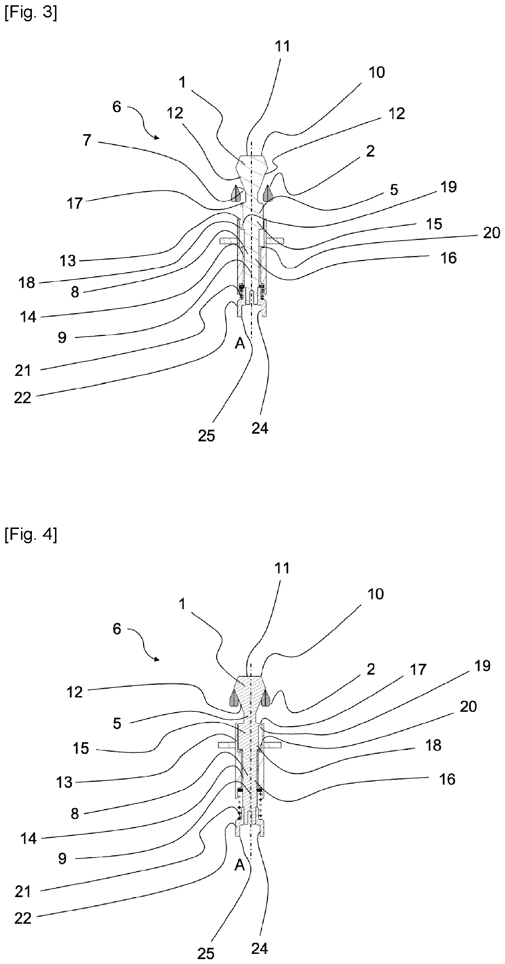

Les moyens de verrouillage 5 sont conçus pour coopérer avec la platine 2 et sont montés mobiles entre, d'une part, une position de désolidarisation, illustrée sur la figure 2 dans laquelle les moyens de verrouillage 5 permettent la désolidarisation du châssis 3 et de la platine 2, et, d'autre part, une première position de verrouillage, illustrée sur la figure 4 dans laquelle les moyens de verrouillage 5 permettent le verrouillage de la platine 2 sur le châssis 3.

Les moyens de verrouillage 5 du dispositif 1 selon l'invention comportent en outre une seconde position de verrouillage, illustrée sur la figure 3, dans laquelle les moyens de verrouillage 5 permettent un débattement limité de la platine 2 par rapport au châssis 3, lorsque la platine 2 est engagée dans le dispositif 1.

Le dispositif 1 selon l'invention permet donc de former un outillage 6, illustré sur les figures 1, 2, 5 et 6, qui comprend la platine 2 porte-outil sur laquelle sont ménagées une pluralité de fentes 7 rectangulaires disposées sur deux bords opposés de la tôle 4. La figure 2 est une vue en coupe du dispositif 1 suivant un premier plan coupant la platine suivant l'axe longitudinal de la fente 7 tandis que les figures 3 et 4 représentent des vues en coupe suivant un deuxième plan perpendiculaire au premier plan.

L'outillage 6 selon l'invention comporte en outre le châssis 3 qui comprend au moins un, en l'occurrence deux dispositifs 1 selon l'invention, dans lesquels les moyens de verrouillage 5 sont chacun conçus pour coopérer avec une fente 7 de la platine 2.

Dans le mode de réalisation illustré sur les figures, les moyens de verrouillage 5 comportent une broche 8 mobile en rotation et en translation. La broche 8 comprend une portion cylindrique 9 prolongée d'une portion tronconique 10 s'élargissant vers une extrémité libre 11 de la broche 8. La portion tronconique 10 et la portion cylindrique 9 s'étendent suivant un axe commun A, illustré sur la figure 2. La portion tronconique 10 comporte deux méplats 12 parallèles l'un à l'autre et disposés en regards l'un de l'autre. Les méplats 12 s'étendent suivant l'axe commun A. La portion tronconique 10 est dimensionnée de sorte que, lorsque les méplats 12 sont alignés avec les bords longitudinaux d'une fente 7 de la platine 2, la portion tronconique 10 peut traverser la fente 7. La Broche 8 est alors dans la position de désolidarisation, comme illustré sur la figure 2. Lorsque les méplats 12 sont orientés de sorte à être perpendiculaires aux bords longitudinaux de la fente 7, la portion tronconique 10 ne peut traverser la fente 7. Par ailleurs, la portion tronconique 10 et la portion cylindrique 9 sont dimensionnées de sorte que, lorsque la portion tronconique 10 est passée au travers de la fente 7, une rotation de 90° de la portion tronconique 10 autour de son axe A permet de solidariser la broche 8 avec la platine 2, comme dans les première et seconde position de verrouillage illustrées sur les figures 3 et 4. C'est-à-dire que les dimensions de la broche 8 l'empêchent de traverser la fente 7 dans les première et seconde position de verrouillage.

Comme illustré sur les figures 2 à 4, la broche 8 est montée mobile dans un alésage 13 ménagé sur le châssis 3 et prolongé d'un perçage 14 permettant le passage de la broche 8 à travers le châssis 3.

La portion cylindrique 9 de la broche 8 se décompose en une première 15 et une deuxième 16 sections présentant chacune un diamètre différent. La première section 15, qui présente le diamètre le plus important, est logée dans l'alésage 13 tandis que la deuxième section 16 traverse le perçage 14. La première section 15 présente deux butées 17,18 distantes l'une de l'autre suivant l'axe A et sont aptes à coopérer avec des ergots 19, 20 disposés dans l'alésage 13 de sortes qu'une rotation de 90°, soit un quart de tour, et une translation suivant l'axe A de la broche 8 permet d'engager ou de désengager les butées 17, 18 contre les ergots 19, 20.

Les moyens de verrouillage 5 comportent également des moyens de rappel élastique tels qu'un ressort 21 disposé le long de la portion cylindrique 9 et coopérant avec le châssis 3 de sorte à forcer la broche 8 à s'insérer dans l'alésage 13 en l'absence des ergots 19, 20.

Lorsque les moyens de verrouillage 5 sont dans la position de désolidarisation, illustrée sur la figure 2, une rotation de 90° de la broche 8 accompagnée d'une translation de la broche 8, suivant l'axe A apte à comprimer le ressort 21, permet de positionner les moyens de verrouillage 5 dans la seconde position de verrouillage, illustrée sur la figure 3 dans laquelle la platine 2 est déplaçable au moins suivant l'axe A d'une distance de l'ordre de la différence maximale de diamètres entre la portion cylindrique 9 et la portion tronconique 10. Dans la seconde position de verrouillage, la butée 18 la plus éloignée de l'extrémité libre 11 vient en butée contre l'ergot 19 le plus près de l'extrémité libre.

Afin de placer les moyens de verrouillage 5 dans la première position de verrouillage, illustrée sur la figure 4, depuis la seconde position de verrouillage, la broche 8 est amenée à subir une rotation de 90° et une translation suivant l'axe A de sorte à détendre le ressort 21. Dans la première position de verrouillage, les butées 17, 18 viennent en appui contre les ergots 19, 20.

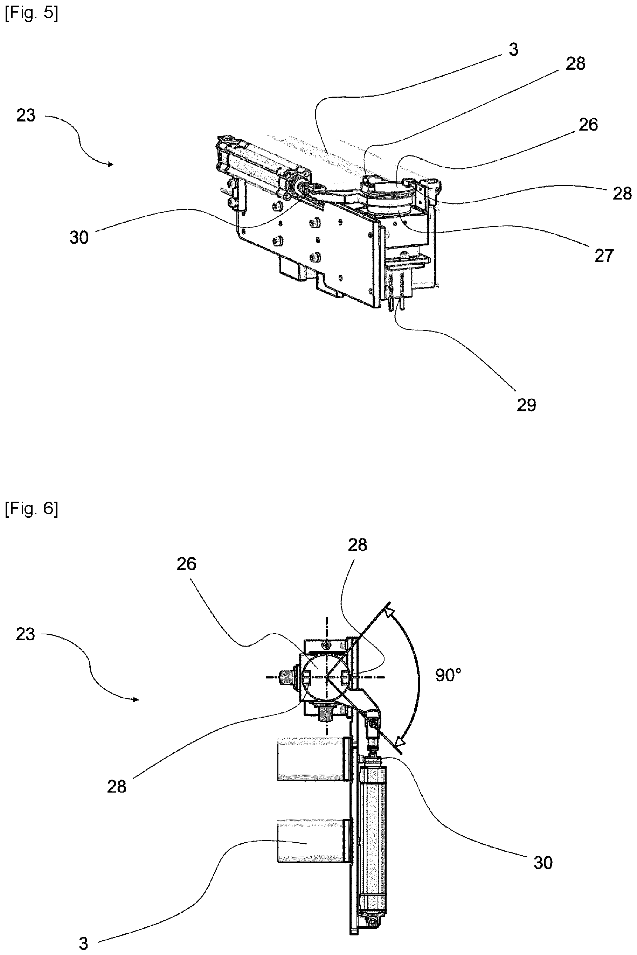

Afin de permettre les mouvements de rotation et de translation décrits précédemment, les moyens de verrouillage 5 comportent une zone d'engagement 22, illustrée sur les figures 2 à 4 et conçue pour permettre la coopération des moyens de verrouillage 5 avec des moyens d'actionnement 23, illustrés sur les figures 5 et 6, en vue de déplacer les moyens de verrouillage 5 d'une position à une autre. Les moyens d'actionnement sont solidaires du châssis 3.

Comme illustré sur les figures 2 à 4, la zone d'engagement 22 comporte une cloche 24 disposée à une extrémité libre 25 de la broche 8 opposée à l'extrémité libre 11 et ouverte vers l'extérieur. La cloche 24 comporte également deux rainures diamétralement opposées, non illustrées.

Comme illustré sur les figures 5 et 6, les moyens d'actionnement 23 comportent un plateau 26 monté sur un palier 27, illustrés sur les figures 5 et 6, sur lequel sont disposées deux lardons d'indexage 28 dimensionnés et positionnés pour être insérables dans les rainures et pour permettre d'imprimer une rotation à la broche 8 lorsque le plateau 26 est mis en rotation.

Comme illustré sur les figures 5 et 6, les moyens d'actionnement 23 comportent également un vérin de montée 29 permettant de déplacer le plateau 26 en translation suivant l'axe A de sorte que, lorsque les lardons d'indexage 28 sont engagés dans les rainures, le vérin de montée 29 est en mesure d'imprimer une translation de la broche 8 suivant l'axe A permettant de comprimer ou de décomprimer le ressort 21.

Le plateau 26 est mis en rotation au moyen d'un vérin de rotation 30 permettant d'imprimer une rotation de 90° au plateau 26.

Ainsi les moyens d'actionnement 23 permettent de déplacer les moyens de verrouillage 5 d'une position à une autre.

Le dispositif 1 de verrouillage selon l'invention permet donc l'assemblage et le désassemblage de l'outillage 6 selon l'invention, dans lequel le châssis 3 est en mesure de recevoir plusieurs platines 2 différentes, chacune portant un outil différent : il suffit de positionner les moyens de verrouillage 5 sur la position désolidarisation. Ainsi, seules les platines 2 sont stockées sur le bord de la chaine d'assemblage ce qui permet de diminuer l'encombrement autour de la chaine d'assemblage. Le dispositif 1 permet également de bloquer la platine 2 dans une première position de verrouillage isostatique sur le châssis 3 ou dans une seconde position de verrouillage permettant un débattement limité. Le passage d'une position à une autre est facile grâce aux moyens d'actionnement 23. L'invention ne se limite pas au mode de réalisation du dispositif de verrouillage ou de l'outillage décrits ci-avant, seulement à titre d'exemple, mais d'autres modes de réalisation peuvent être conçus par l'homme de métier sans sortir du cadre et de la portée de la présente invention.

## Revendications

1. Dispositif (1) de verrouillage conçu pour permettre l'assemblage d'une platine (2) porte-outil sur un châssis (3), le dispositif (1) comportant des moyens de verrouillage (5) solidaires du châssis (3), conçus pour coopérer avec la platine (2) et montés mobiles entre une position de désolidarisation, dans laquelle les moyens de verrouillage (5) permettent la désolidarisation du châssis (3) et de la platine (2), et une première position de verrouillage, dans laquelle les moyens de verrouillage (5) permettent le verrouillage isostatique de la platine (2) sur le châssis (3), le dispositif (1) étant **caractérisé en ce que** les moyens de verrouillage (5) comportent en outre une seconde position de verrouillage, distincte de la première position, dans laquelle les moyens de verrouillage (5) permettent un débattement limité de la platine (2) par rapport au châssis (3), lorsque la platine (2) est engagée dans le dispositif (1).

2. Dispositif (1) de verrouillage selon la revendication 1, **caractérisé en ce que** les moyens de verrouillage (5) comportent une zone d'engagement (22) conçue pour permettre la coopération des moyens de verrouillage (5) avec des moyens d'actionnement (23) en vue de déplacer les moyens de verrouillage (5) d'une position à une autre.

3. Dispositif (1) selon la revendication 2, **caractérisé en ce que** les moyens d'actionnement (23) sont solidaires du châssis (3).

4. Dispositif (1) selon l'une des revendications 1 à 3, **caractérisé en ce que** les moyens de verrouillage (5) comportent une broche (8) mobile, le passage des moyens de verrouillage (5) d'une position à une autre se faisant par une rotation et une translation de la broche (8).

5. Dispositif (1) selon la revendication 4, **caractérisé en ce que** la rotation correspond à un quart de tour de la broche (8).

6. Outillage (6) comprenant une platine (2) porte-outil sur laquelle sont ménagées une pluralité de fentes (7), l'outillage (6) comportant en outre un châssis (3) comprenant au moins un dispositif (1) selon l'une des revendications 1 à 5 dans lequel les moyens de verrouillage (5) sont conçus pour coopérer avec une fente (7) de la platine (2).

## Patentansprüche

1. Verriegelungsvorrichtung (1), die zur Montage einer Werkzeughalteplatte (2) an einem Rahmen (3) ausgebildet ist, wobei die Vorrichtung (1) Verriegelungsmittel (5) aufweist, die mit dem Rahmen (3) fest verbunden sind, die zur Zusammenarbeit mit der Platte (2) ausgebildet sind und beweglich zwischen einer Lösestellung, in der die Verriegelungsmittel (5) die Lösestellung des Rahmens (3) und der Platte (2) ermöglichen, und einer ersten Verriegelungsstellung, in der die Verriegelungsmittel (5) die isostatische Verriegelung der Platte (2) an dem Rahmen (3) ermöglichen, angeordnet sind, wobei die Vorrichtung (1) **dadurch gekennzeichnet ist, dass** die Verriegelungsmittel (5) ferner eine von der ersten Stellung verschiedene zweite Verriegelungsstellung aufweisen, in der die Verriegelungsmittel (5) eine begrenzte Auslenkung der Platine (2) gegenüber dem Rahmen (3) ermöglichen, wenn die Platine (2) in die Vorrichtung (1) eingesetzt ist.

2. Verriegelungsvorrichtung (1) nach Anspruch 1, **dadurch gekennzeichnet, dass** die Verriegelungsmittel (5) einen Eingriffsbereich (22) aufweisen, der so ausgebildet ist, dass er das Zusammenwirken der Verriegelungsmittel (5) mit Betätigungsmitteln (23) ermöglicht, um die Verriegelungsmittel (5) von einer Position in eine andere zu bewegen.

3. Vorrichtung (1) nach Anspruch 2, **dadurch gekennzeichnet, dass** die Betätigungsmittel (23) fest mit dem Rahmen (3) verbunden sind.

4. Vorrichtung (1) nach einem der Ansprüche 1 bis 3, **dadurch gekennzeichnet, dass** die Verriegelungsmittel (5) eine bewegliche Spindel (8) umfassen, wobei der Übergang der Verriegelungsmittel (5) von einer Position in eine andere durch eine Drehung und eine Verschiebung der Spindel (8) erfolgt.

5. Vorrichtung (1) nach Anspruch 4, **dadurch gekennzeichnet, dass** die Drehung einer Viertelumdrehung der Spindel (8) entspricht.

6. Werkzeug (6) mit einer Werkzeugaufnahmeplatte (2), auf der mehrere Schlitze (7) vorgesehen sind, wobei das Werkzeug (6) ferner einen Rahmen (3) aufweist, der mindestens eine Vorrichtung (1) nach einem der Ansprüche 1 bis 5 aufweist, wobei die Verriegelungsmittel (5) zum Zusammenwirken mit einem Schlitz (7) der Platte (2) ausgebildet sind.

## Claims

1. Locking device (1) designed to allow the assembly of a tool-holder plate (2) on a frame (3), the device (1) comprising locking means (5) integral with the frame (3), designed to cooperate with the plate (2) and mounted so as to be able to move between a detachment position, in which the locking means (5) allow the frame (3) and the plate (2) to be detached, and a first locking position, in which the locking means (5) allow the plate (2) to be isostatically locked on the frame (3), the device (1) being **characterized in that** the locking means (5) comprise in addition to a second locking position, distinct from the first position, in which the locking means (5) allow limited movement of the plate (2) with respect to the frame (3), when the plate (2) is engaged in the device (1).

2. Locking device (1) according to Claim 1, **characterized in that** the locking means (5) comprise an engagement zone (22) designed to allow the locking means (5) to cooperate with actuating means (23) in order to move the locking means (5) from one position to another.

3. Device (1) according to Claim 2, **characterized in that** the actuating means (23) are integral with the chassis (3).

4. Device (1) according to one of Claims 1 to 3, **characterized in that** the locking means (5) comprise a movable pin (8), the passage of the locking means (5) from one position to another taking place by a rotation and a translation of the pin (8).

5. Device (1) according to Claim 4, **characterized in that** the rotation corresponds to a quarter of a turn of the spindle (8).

6. Tooling (6) comprising a tool-holder plate (2) on which a plurality of slots (7) are provided, the tooling (6) further comprising a frame (3) comprising at least one device (1) according to one of claims 1 to 5 in which the locking means (5) are designed to cooperate with a slot (7) of the plate (2).
